# NEUE EUROPÄISCHE PATENTSCHRIFT

(11) **EP 1 291 158 B2**
(45) Veröffentlichungstag und Bekanntmachung des Hinweises auf die Entscheidung über den Einspruch: **08.07.2009**
(45) Hinweis auf die Patenterteilung: 12.07.2006
(21) Anmeldenummer: 02020056.4
(22) Anmeldetag: 06.09.2002
(51) Int. Cl.: B29C 73/16

(54) **Abdichtsystem für Reifen**
Tyre sealing system
Système d'obturation d'un pneumatique

(30) Priorität: 11.09.2001 DE 20115003 U
(43) Veröffentlichungstag der Anmeldung: 12.03.2003
(73) Patentinhaber: SUMITOMO RUBBER INDUSTRIES, LTD., Kobe-shi, Hyogo-ken, 651-0072 (JP)
(72) Erfinder: Eckhardt, Arnold, 63691 Ranstadt (DE)
(74) Vertreter: Manitz, Finsterwald & Partner GbR

(56) Entgegenhaltungen:
- EP-A- 0 753 420
- WO-A-03/004328
- DE-A- 19 846 451
- DE-A- 29 716 453
- US-B1- 6 283 172

## Beschreibung

Die Erfindung betrifft ein System zum Abdichten aufblasbarer Gegenstände mit wenigstens einem ein Abdichtmittel enthaltenden Behälter, der einen Gaseinlaß und einen mit einem abzudichtenden Gegenstand koppelbaren Auslaß aufweist, und einer an den Gaseinlaß des Behälters anschließbaren Gasdruckquelle.

Eine Abdichtvorrichtung ist beispielsweise aus der DE 198 46 451 A1 bekannt. Diese Vorrichtung dient dazu, ein Leck in einem durchstochenen oder während der Fahrt beschädigten Reifen dadurch abzudichten, daß ein spezielles Abdichtmittel über das Reifenventil in den Reifen eingebracht und der Reifen anschließend zumindest auf einen Druck, bei dem er gefahren werden kann, aufgepumpt wird.

Aufgabe der Erfindung ist es, ein Abdichtsystem der eingangs genannten Art zu schaffen, das bei zuverlässiger Funktionsweise möglichst preiswert, einfach aufgebaut und leicht zu handhaben ist.

Die Lösung dieser Aufgabe erfolgt durch die Merkmale des Anspruchs 1 insbesondere dadurch, daß die Gasdruckquelle zumindest teilweise in einem Gehäuse untergebracht ist und das Gehäuse zumindest einen Kopplungsabschnitt aufweist, an dem der Behälter zur Herstellung eines Benutzungszustands mit dem Gehäuse mechanisch derart koppelbar ist, daß das auf dem Boden stehende Gehäuse der Gasdruckquelle als Standfuß für den bestimmungsgemäß orientierten Behälter dient.

Erfindungsgemäß erfüllt das bevorzugt aus Kunststoff bestehende Gehäuse eine vorteilhafte Doppelfunktion, indem es zum einen für die Unterbringung der Gasdruckquelle sorgt und zum anderen eine Standhilfe für den Behälter bereitstellt, an welche der Behälter mit einer bestimmungsgemäßen Orientierung gekoppelt werden kann, die ein ordnungsgemäßes Abdichten des jeweiligen aufblasbaren Gegenstands ermöglicht. Bei der Gasdruckquelle handelt es sich vorzugsweise um ein handelsübliches Gerät mit Gehäuse. Diese im Handel erhältliche Gasdruckquelle bzw. deren Gehäuse braucht lediglich mit dem Kopplungsabschnitt für den Behälter versehen zu werden, um als Standfuß für den Behälter dienen zu können. Auf diese Weise kann erfindungsgemäß z.B. ein handelsüblicher elektrisch betreibbarer Kompressor außerdem als Standhilfe für den das Abdichtmittel enthaltenden Behälter verwendet werden. Zusätzliche Maßnahmen, um einen sicheren Stand des Behälters zu gewährleisten, sind erfindungsgemäß nicht erforderlich.

Der Behälter umfaßt vorzugsweise einen das Abdichtmittel enthaltenden Tankabschnitt, der zumindest näherungsweise aufrecht stehen muß, um einen ordnungsgemäßen Abdichtbetrieb zu gewährleisten, und bevorzugt eine zylindrische oder flaschenförmige Gestalt aufweist. Mit dem erfindungsgemäßen Abdichtsystem kann mittels des Gehäuses der Gasdruckquelle in vorteilhafter Weise die Standfläche des Behälters vergrößert oder überhaupt erst geschaffen werden, so daß der Behälter während des Abdichtbetriebs einen sicheren aufrechten Stand aufweist.

Als besonders vorteilhaft erweist sich die Erfindung in Verbindung mit Behältern, die an ihrer im Benutzungszustand dem Boden zugewandten Seite derart ausgebildet sind, daß sie nicht von alleine stehen können. Dies ist z.B. bei Behältern der Fall, bei denen der Gaseinlaß und der Auslaß in einer Entnahmeeinheit ausgebildet sind, die an einer der Stirnseiten des jeweiligen Behälters bzw. Tankabschnitts insbesondere lösbar angebracht und bevorzugt mit dem Behälter bzw. Tankabschnitt verschraubt ist. Unabhängig von der Ausgestaltung der Entnahmeeinheit und ihrer Fähigkeit, als mehr oder weniger sichere Standfläche für den Behälter zu dienen, sorgt die erfindungsgemäße Verwendung der Gasdruckquelle bzw. des Gehäuses der Gasdruckquelle dafür, daß der Behälter während der Benutzung ordnungsgemäß orientiert ist und einen sicheren Stand aufweist.

Im Fall eines mit einer Entnahmeeinheit versehenen Behälters ist erfindungsgemäß bevorzugt vorgesehen, daß der Behälter über die Entnahmeeinheit mit dem Gehäuse der Gasdruckquelle gekoppelt werden kann. Die vom Behälter abgewandte Seite der Entnahmeeinheit kann dabei als zusätzliche Standfläche ausgebildet sein. Hierdurch ist es möglich, den Behälter vorübergehend abzustellen, um z.B. den Behälter bzw. die Entnahmeeinheit an die Gasdruckquelle anzuschließen, bevor der Behälter mit dem dann als Standfuß dienenden Gehäuse der Gasdruckquelle gekoppelt wird, um mit dem Abdichtvorgang zu beginnen.

Erfindungsgemäß ist es ferner prinzipiell möglich, daß im gekoppelten Zustand das Gehäuse lediglich eine zusätzliche Standhilfe darstellt und der Behälter außerdem selbst, z.B. über eine Entnahmeeinheit, am Boden abgestützt ist.

Vorzugsweise ist allerdings erfindungsgemäß vorgesehen, daß der Behälter im Benutzungszustand ausschließlich über das Gehäuse am Boden abgestützt ist. Hierdurch ist die Standfestigkeit des Behälters ausschließlich durch das Gehäuse und damit unabhängig von der Ausgestaltung des Behälters bzw. einer ggf. vorgesehenen Entnahmeeinheit des Behälters sichergestellt.

Das erfindungsgemäße System kann grundsätzlich zum Abdichten beliebiger aufblasbarer Gegenstände verwendet werden. Eine bevorzugte Anwendung des erfindungsgemäßen Systems betrifft das Abdichten von Fahrzeugreifen. Hierbei ist das erfindungsgemäße Abdichtsystem bevorzugt als ein transportierbarer Reparatur-Set ausgebildet, der problemlos beispielsweise im Kofferraum eines Fahrzeuges mitgeführt werden kann. Im Fall einer Reifenpanne braucht lediglich der Behälter mit dem Gehäuse der Gasdruckquelle gekoppelt zu werden, wobei der Anschluß des Behälters an die Gasdruckquelle entweder vor oder nach dem Koppelvorgang erfolgen kann, sofern nicht eine permanente Verbindung zwischen Behälter und Gasdruckquelle vorgesehen ist.

Mit "Boden" im Sinne der Erfindung ist grundsätzlich jede vorzugsweise zumindest im wesentlichen ebene Fläche gemeint, auf welche das Gehäuse der Gasdruckquelle gelegt oder gestellt werden kann, so daß der Behälter im mit dem Gehäuse gekoppelten Zustand eine bestimmungsgemäße Orientierung derart aufweist, daß ein ordnungsgemäßer Abdichtbetrieb gewährleistet ist.

Die Gasdruckquelle ist vorzugsweise als elektrisch betreibbarer Kompressor ausgebildet. Im Fall eines zum Mitführen in Kraftfahrzeugen ausgebildeten erfindungsgemäßen Abdichtsystems ist vorzugsweise vorgesehen, daß der Kompressor an eine Bordsteckdose des Kraftfahrzeugs anschließbar ist.

Das Gehäuse weist vorzugsweise wenigstens eine ebene Standfläche auf. Bevorzugt ist das Gehäuse etwa quaderförmig ausgebildet.

Vorzugsweise ist der Kopplungsabschnitt derart ausgebildet, daß der Behälter form- und/oder kraftschlüssig an das Gehäuse gekoppelt werden kann.

In einer besonders bevorzugten praktischen Gestaltung der Erfindung ist vorgesehen, daß der Behälter auf das Gehäuse aufschiebbar und/oder aufsteckbar ist. Eine besonders einfache Kopplung des Behälters mit dem Gehäuse wird gemäß einer bevorzugten Ausführungsform dann erzielt, wenn für diese Kopplung lediglich eine einzige in einem Zuge erfolgende Relativbewegung zwischen dem Behälter und dem Gehäuse erforderlich ist. Vorzugsweise handelt es sich um eine lineare Relativbewegung.

Ferner ist die Kopplung zwischen dem Behälter und dem Gehäuse bevorzugt derart ausgelegt, daß der Behälter im mit dem Gehäuse gekoppelten Zustand an Bewegungen relativ zum Gehäuse in von einer Koppelrichtung abweichenden Richtungen gehindert ist. Hierdurch kann der Behälter zwar entgegen der Koppelrichtung wieder vom Gehäuse gelöst, ansonsten aber nicht relativ zum Gehäuse bewegt werden. Einem unbeabsichtigten Lösen der Verbindung zwischen Behälter und Gehäuse wird hierdurch in vorteilhafter Weise entgegengewirkt.

Bevorzugt ist der Kopplungsabschnitt an einem im Benutzungszustand vom Boden beabstandeten Bereich des Gehäuses ausgebildet. Der Kopplungsabschnitt kann an einer parallel zu einer Standfläche des Gehäuses verlaufenden Gehäuseseite ausgebildet sein. Auf diese Weise kann dafür gesorgt werden, daß auch im mit dem Gehäuse gekoppelten Zustand die Unterseite des Behälters und insbesondere eine während der Benutzung dem Boden zugewandte Entnahmeeinheit des Behälters zum einen nicht aufgrund unsauberer Böden verschmutzt und zum anderen problemlos zugänglich ist.

Vorzugsweise ist ein den Gaseinlaß umfassender Anschlußbereich des Behälters im mit dem Gehäuse gekoppelten Zustand im Bereich einer Gehäuseöffnung angeordnet, und zwar bevorzugt derart, daß der Gaseinlaß dem Gehäuseinneren zugewandt ist. Hierdurch kann in vorteilhafter Weise eine kurze und einfache Anschlußverbindung zwischen dem Behälter und der Gasdruckquelle realisiert werden.

Ferner ist bevorzugt vorgesehen, daß der Kopplungsabschnitt am Randbereich einer Gehäuseseite ausgebildet ist, der eine zumindest im Benutzungszustand vorhandene Gehäuseöffnung begrenzt. Bei der Gehäuseöffnung kann es sich um eine offene Gehäuseseite handeln, die bei Nichtbenutzung vorzugsweise verschlossen ist. Die Gehäuseöffnung dient insbesondere dazu, den Behälter an die im Gehäuse untergebrachte Gasdruckquelle anzuschließen. Hierfür kann eine bei Nichtbenutzung zusammen mit der Gasdruckquelle im Gehäuse untergebrachte und vorzugsweise permanent mit der Gasdruckquelle verbundene Anschlußleitung dienen.

Es kann eine Verschlußklappe vorgesehen sein, mit welcher die Gehäuseöffnung verschließbar ist. Der Kopplungsabschnitt für den Behälter ist bevorzugt an einer Gehäuseseite ausgebildet, die der Gehäuseseite, an der die Verschlußklappe angelenkt ist, gegenüberliegt.

In einer besonders bevorzugten praktischen Ausführungsform der Erfindung umfaßt der Kopplungsabschnitt wenigstens eine Aussparung, die in einer der Gehäuseseiten ausgebildet und mit der ein Kopplungsbereich des Behälters in Eingriff bringbar ist. Ein derartiger Kopplungsabschnitt kann auf besonders einfache Weise hergestellt werden, indem lediglich die Aussparung in der betreffenden Gehäuseseite ausgebildet wird, was z.B. einfach durch Herausschneiden oder Herausbrechen erfolgen kann.

Insbesondere ist es hierdurch möglich, einen handelsüblichen Kompressor bzw. das Gehäuse eines im Handel erhältlichen Kompressors mit der Koppelaussparung für den Behälter zu versehen, was mit minimalem Arbeits- und Zeitaufwand möglich ist. Durch diese bezogen auf den Aufwand geringfügige, von der Wirkung her jedoch äußerst vorteilhafte und dem Gehäuse eine vollkommen neue Zusatzfunktion verleihende Bearbeitung eines handelsüblichen Kompressors läßt sich folglich mit minimalem Aufwand ein maximaler Nutzeffekt erzielen.

Besonders bevorzugt ist es, wenn die Aussparung eine Einbuchtung in einem Rand einer der Gehäuseseiten umfaßt. Eine derartige Aussparung kann besonders einfach hergestellt werden und gleichzeitig zusammen mit den sie begrenzenden Randbereichen dem Behälter einen sicheren Halt bieten.

Bevorzugt ist es, wenn der Behälter und insbesondere dessen Entnahmeeinheit mit Führungs- und/oder Haltemitteln versehen ist, die mit dem Kopplungsabschnitt zusammenwirken. Die Führungs- und/oder Haltemittel sind vorzugsweise in Form von Schlitzen oder Nuten vorgesehen, die mit den Randbereichen zusammenwirken, welche eine Gehäuseaussparung für den Behälter begrenzen.

Vorzugsweise sind die Führungs- und/oder Haltemittel an einander diametral gegenüberliegenden Seiten eines zylindrischen Abschnitts des Behälters, insbesondere einer Entnahmeeinheit des Behälters, ausgebildet.

Ferner ist bevorzugt vorgesehen, daß der Behälter, insbesondere eine Entnahmeeinheit des Behälters, mit Anschlägen versehen ist, über welche die Sollposition des mit dem Gehäuse gekoppelten Behälters festgelegt ist. Eine definierte Relativlage zwischen dem Behälter und dem Gehäuse während des Abdichtbetriebs ist auf diese Weise sichergestellt.

Vorzugsweise sind die Anschläge als Aufschieb- oder Aufsteckbegrenzung für den Behälter ausgebildet.

Weitere bevorzugte Ausführungsformen der Erfindung sind auch in den Unteransprüchen, der Beschreibung sowie der Zeichnung angegeben.

Die Erfindung wird im folgenden beispielhaft unter Bezugnahme auf die Zeichnung beschrieben. Es zeigen:
- Fig. 1a und 1b: perspektivische Ansichten eines erfindungsgemäßen Abdichtsystems in einem Vorbenutzungszustand,
- Fig. 2a und 2b: Ansichten entsprechend Fig. 1a und 1b mit an das Gehäuse gekoppeltem Behälter, und
- Fig. 3: einen Behälter eines erfindungsgemäßen Abdichtsystems in einem Aufbewahrungszustand.

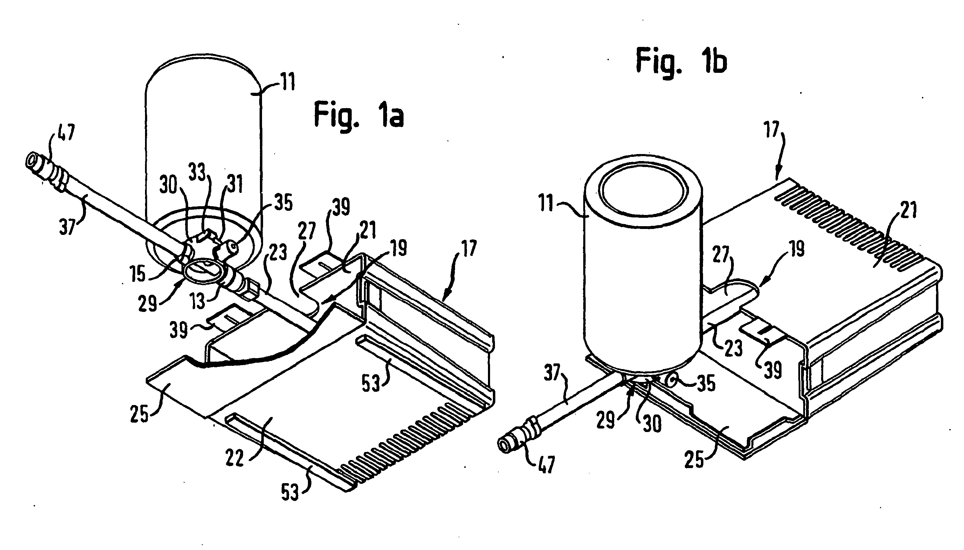

Die Fig. 1a und 1b zeigen eine Ausführungsform eines erfindungsgemäßen Systems, das als in einem Fahrzeug mitführbarer Reparatur-Set zum Abdichten von beschädigten Fahrzeugreifen dient. Das System umfaßt einen Behälter 11, dessen zylindrischer Tankabschnitt mit einem speziellen Abdichtmittel gefüllt ist und an seiner unteren Stirnseite eine Entnahmeeinheit 29 trägt, die lösbar mit der Unterseite verschraubt ist. Die Entnahmeeinheit 29 weist einen Gaseinlaß 13 auf, über welche die Entnahmeeinheit 29 über eine Leitung 23 an einen als Gasdruckquelle dienenden Kompressor angeschlossen werden kann, auf den an anderer Stelle näher eingegangen wird. Ein Auslaß 15 der Entnahmeeinheit 29 ist an einen Füllschlauch 37 angeschlossen, über welche der Behälter 11 mit einem abzudichtenden Fahrzeugreifen verbunden werden kann. Die Verbindung mit dem Reifenventil erfolgt über eine Kupplung 47.

Auf die Funktionsweise des Behälters 11 und der Entnahmeeinheit 29, die ausführlich in der deutschen Patentanmeldung DE 198 46 451 A1 beschrieben ist, wird im folgenden nicht näher eingegangen. Das Grundprinzip besteht darin, mittels des Kompressors ein Gas, insbesondere Luft, über den Einlaß 13 in den Behälter 11 einzuleiten und dadurch das Abdichtmittel über den Auslaß 15 in den abzudichtenden Reifen zu drücken.

Der in den Figuren nicht dargestellte Kompressor ist in einem quader- oder kastenförmigen Gehäuse 17 untergebracht, das an einer Seite geöffnet werden kann. Hierzu ist eine Verschlußklappe 25 vorgesehen, die an einer als Standfläche dienenden unteren Gehäuseseite 22 angelenkt ist und im geschlossenen Zustand mittels zweier Verriegelungslaschen 39 verriegelt werden kann, welche an der gegenüberliegenden Gehäuseseite 21 über Filmscharniere verschwenkbar angebracht sind.

Bei geöffneter Klappe 25 kann an den Gaseinlaß 13 des Behälters 11 der permanent mit dem Kompressor verbundene Schlauch 23 angeschlossen und auf diese Weise der Behälter 11 mit der Gasdruckquelle verbunden werden. Die Länge der Gasanschlußleitung 23 ist derart bemessen, daß das Herstellen der Verbindung zwischen der Leitung 23 und dem Gaseinlaß 13 bei von der offenen Gehäuseseite beabstandetem Behälter 11 erfolgen kann, um ein bequemes Anschließen des Behälters 11 zu ermöglichen.

Ein Kopplungsabschnitt 19 des Gehäuses 17, an dem der Behälter 11 über die Entnahmeeinheit 29 mit dem Gehäuse 17 koppelbar ist, wird von einer Aussparung 27 in der oberen Gehäuseseite 21 sowie den die Aussparung 27 begrenzenden Randbereichen dieser Gehäuseseite 21 gebildet. Die Breite der Aussparung 27 ist kleiner als der Durchmesser eines zylindrischen Abschnitts 30 der Entnahmeeinheit 29 des Behälters 11. Der von dem geraden, die offene Gehäuseseite begrenzenden Rand der oberen Gehäuseseite 21 zurückgesetzte Endbereich der als etwa U-förmige Einbuchtung ausgebildeten Aussparung 27 ist entsprechend der Krümmung des zylindrischen Abschnitts 30 der Entnahmeeinheit 29 abgerundet.

Benachbart der unteren Stirnseite des Behälters 11 bzw. dessen Tankabschnitts ist der zylindrische Abschnitt 30 der Entnahmeeinheit 29 an diametral einander gegenüberliegenden Seiten mit parallel zur Stirnseite verlaufenden Nuten 31 versehen, in welche die geraden Abschnitte der die Aussparung 27 in der Gehäuseseite 21 begrenzenden Randbereiche eingreifen, wenn der Behälter 11 auf die Gehäuseseite 21 geschoben wird.

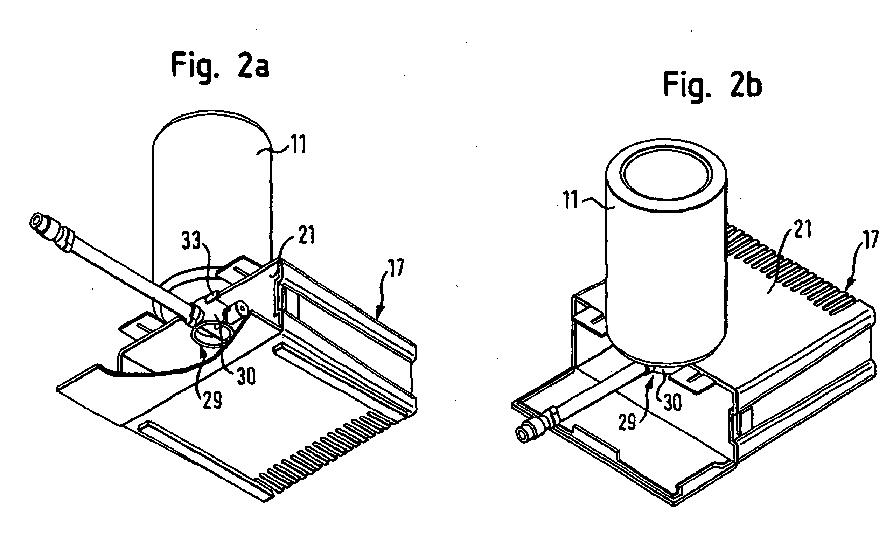

Im aufgeschobenen Zustand, der in den Fig. 2a und 2b dargestellt ist, ist aufgrund dieser form- und kraftschlüssigen Kopplung des Behälters 11 mit der oberen Gehäuseseite 21 lediglich eine Bewegung des Behälters 11 entgegen der Aufschieberichtung relativ zum Gehäuse 17 möglich, um den Behälter 11 wieder vom Gehäuse 17 abnehmen zu können. Diese Verbindung zwischen der Gehäuseseite 21 und dem Behälter 11 über die Randbereiche, welche die Aussparung 27 seitlich begrenzen und in die als Führungs- und Haltemittel dienenden Nuten 31 eingreifen, verhindert Relativbewegungen mit einer Komponente senkrecht zur oberen Gehäuseseite 21 und damit Bewegungen des Behälters 11 senkrecht zu dessen Längsachse.

Als Winkelstücke ausgebildete und an der Entnahmeeinheit 29 befestigte Anschläge 33 für den Rand der oberen Gehäuseseite 21 definieren die Sollposition des Behälters 11 im mit dem Gehäuse 11 gekoppelten Zustand.

Ein bestimmungsgemäßer Gebrauch des Behälters 11 setzt voraus, daß dieser zumindest im wesentlichen aufrecht steht, d.h. die Längsachse des Behälters 11 zumindest im wesentlichen vertikal verläuft, und der Behälter 11 mit der Entnahmeeinheit 29 dem Boden zugewandt ist und insofern auf dem Kopf steht. Die erfindungsgemäße Ausgestaltung der oberen Gehäuseseite 21 als Fixiereinrichtung für den Behälter 11 gewährleistet eine definierte und stabile Relativorientierung zwischen dem Gehäuse 17 und dem Behälter 11 derart, daß sich die Längsachse des Behälters 11 senkrecht zur oberen Gehäuseseite 21 und damit senkrecht zur parallel verlaufenden Unterseite 22 des Gehäuses 17 erstreckt. Somit ist, wenn das Gehäuse 17 mit seiner Unterseite 22 bzw. an der Unterseite 22 angebrachten Auflagestreifen 53 auf eine ebene Fläche gelegt oder gestellt wird, ein bestimmungsgemäßer Abdichtbetrieb mit aufrecht stehendem Behälter 11 sichergestellt. Erfindungsgemäß dient somit das Gehäuse 17 des Kompressors als Standhilfe oder Standfuß für den Behälter 11, der eine ordnungsgemäße Orientierung des Behälters 11 während des Abdichtbetriebs gewährleistet. Das Gehäuse 17 erfüllt hierdurch in vorteilhafter Weise eine Doppelfunktion als Kompressorgehäuse einerseits und Behälterbasis oder Behältersockel mit einer sicheren Fixiermöglichkeit für den Behälter andererseits.

Die Einheit aus Kompressor und Gehäuse 17 ist im Handel frei erhältlich. Folglich braucht lediglich durch Ausbilden der Aussparung 27 in der oberen Gehäuseseite 21 diese zur Aufnahme und Fixierung des Behälters 11 bearbeitet zu werden, woraufhin das Gehäuse 17 als Standfuß für den Behälter 11 verwendet werden kann. Auf denkbar einfache und preiswerte Art und Weise werden hierdurch ohnehin vorhandene Komponenten für eine vorteilhafte Zusatzfunktion genutzt, die anderenfalls nur mit Hilfe zusätzlicher Bauteile erfüllt werden könnte, was die Kosten, den Platzbedarf und das Gewicht des Abdichtsystems nachteilig erhöhen würde.

Zur Herstellung des Benutzungszustands braucht der Benutzer lediglich die Verschlußklappe 25 zu öffnen, die Entnahmeeinheit 29 an den Gasschlauch 23 anzuschließen und den Behälter 11 auf die obere Gehäuseseite 21 zu stecken. Auf einer zumindest näherungsweise ebenen Fläche ist durch das Gehäuse 17 ein sicherer Stand des Behälters 11 selbst bei einer durch einen hohen Füllstand im Tankabschnitt bedingten Kopflastigkeit gewährleistet. Der Kompressor wird durch Anschließen an eine Bordsteckdose des Kraftfahrzeugs und Betätigen eines Schalters in Betrieb genommen.

In einer alternativen Ausführungsform der Erfindung kann grundsätzlich vorgesehen sein, daß das Gehäuse 17 nicht nur den Kompressor enthält, sondern außerdem zur Aufbewahrung des Behälters 11 sowie des Füllschlauches 37 dient. Auf diese Weise kann eine kompakte Einheit geschaffen werden, die es gestattet, bei Nichtbenutzung alle Bestandteile des erfindungsgemäßen Abdichtsystems gemeinsam zu transportieren und aufzubewahren. Der Behälter 11 kann bereits bei der Herstellung oder Zusammenstellung dieses Systems an den Kompressor angeschlossen werden.

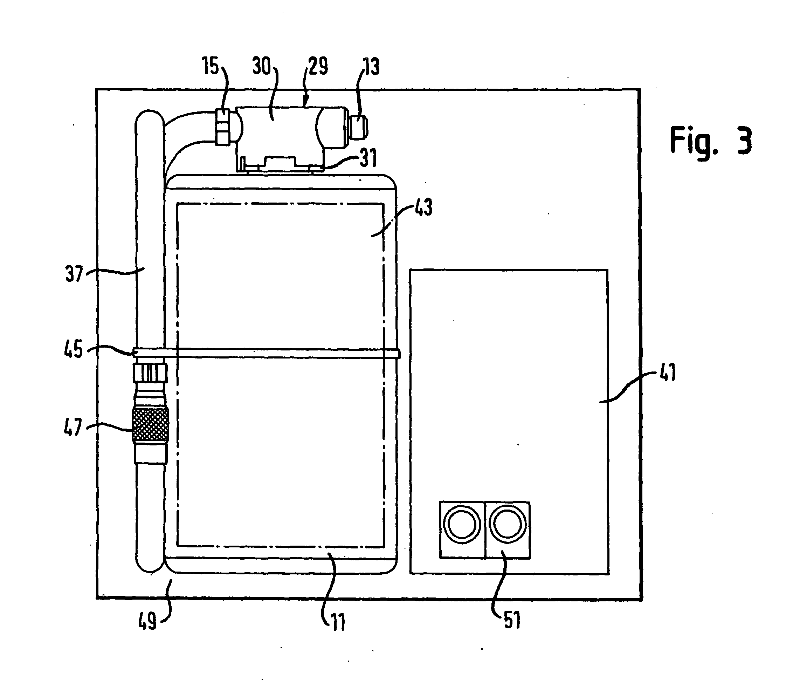

In der bevorzugten Variante der Erfindung wird der Behälter 11 jedoch getrennt von dem Kompressor aufbewahrt, und zwar in einem bevorzugt aus PE bestehenden Beutel 49, wie es Fig. 3 zeigt. An dem mit einem Etikett 43 versehenen Behälter 11 ist der zur Verbindung mit dem Fahrzeugreifen dienende Schlauch 37 mittels eines Gummiringes 45 gehalten. Der Beutel enthält außerdem eine Bedienungsanleitung 41, die mit Aufklebern versehen ist, welche auf die zulässige Höchstgeschwindigkeit eines mittels des erfindungsgemäßen Systems abgedichteten Reifens hinweisen.

### Bezugszeichenliste

- 11: Behälter
- 13: Gaseinlaß
- 15: Auslaß
- 17: Gehäuse
- 19: Kopplungsabschnitt
- 21: Gehäuseseite
- 22: Gehäuseseite
- 23: Leitung, Gasschlauch
- 25: Verschlußklappe
- 27: Aussparung
- 29: Entnahmeeinheit
- 30: zylindrischer Abschnitt
- 31: Führungs- und/oder Haltemittel
- 33: Anschlag
- 35: Überdruckventil
- 37: Füllschlauch
- 39: Verriegelungslasche
- 41: Bedienungsanleitung
- 43: Etikett
- 45: Gummiring
- 47: Kupplung
- 49: Beutel
- 51: Etikett
- 53: Auflagestreifen

## Patentansprüche

1. System zum Abdichten aufblasbarer Gegenstände, insbesondere Reifen, mit wenigstens einem ein Abdichtmittel enthaltenden Behälter (11), der einen Gaseinlass (13) und einen mit einem abzudichtenden Gegenstand koppelbaren Auslass (15) aufweist, und einer an den Gaseinlass (13) des Behälters (11) anschließbaren und zumindest teilweise in einem Gehäuse (17) untergebrachten Gasdruckquelle, insbesondere einem elektrisch betreibbaren Kompressor, wobei das Gehäuse (17) der Gasdruckquelle zumindest einen Kopplungsabschnitt (19) aufweist, an dem der Behälter (11) zur Herstellung eines Benutzungszustands mit dem Gehäuse (17) mechanisch und insbesondere form- und/oder kraftschlüssig koppelbar ist derart, dass das auf dem Boden stehende Gehäuse (17) der Gasdruckquelle als Standfuß für den bestimmungsgemäß orientierten Behälter (11) dient, wobei der Behälter (11) auf das Gehäuse (17) aufschiebbar und/oder aufsteckbar ist.

2. System zum Abdichten aufblasbarer Gegenstände, insbesondere Reifen, mit wenigstens einem ein Abdichtmittel enthaltenden Behälter (11), der einen Gaseinlass (13) und einen mit einem abzudichtenden Gegenstand koppelbaren Auslass (15) aufweist, und einer an den Gaseinlass (13) des Behälters (11) anschließbaren und zumindest teilweise in einem Gehäuse (17) untergebrachten Gasdruckquelle, insbesondere einem elektrisch betreibbaren Kompressor, wobei das Gehäuse (17) der Gasdruckquelle zumindest einen Kopplungsabschnitt (19) aufweist, an dem der Behälter (11) zur Herstellung eines Benutzungszustands mit dem Gehäuse (17) mechanisch und insbesondere form- und/oder kraftschlüssig koppelbar ist derart, dass das auf dem Boden stehende Gehäuse (17) der Gasdruckquelle als Standfuß für den bestimmungsgemäß orientierten Behälter (11) dient, wobei der Kopplungsabschnitt (19) am Randbereich einer Gehäuseseite (21) ausgebildet ist, der eine zumindest im Benutzungszustand vorhandene Gehäuseöffnung begrenzt, die mittels einer Verschlussklappe (25) verschließbar ist.

3. System zum Abdichten aufblasbarer Gegenstände, insbesondere Reifen, mit wenigstens einem ein Abdichtmittel enthaltenden Behälter (11), der einen Gaseinlass (13) und einen mit einem abzudichtenden Gegenstand koppelbaren Auslass (15) aufweist, und einer an den Gaseinlass (13) des Behälters (11) anschließbaren und zumindest teilweise in einem Gehäuse (17) untergebrachten Gasdruckquelle, insbesondere einem elektrisch betreibbaren Kompressor, wobei das Gehäuse (17) der Gasdruckquelle zumindest einen Kopplungsabschnitt (19) aufweist, an dem der Behälter (11) zur Herstellung eines Benutzungszustands mit dem Gehäuse (17) mechanisch und insbesondere form- und/oder kraftschlüssig koppelbar ist derart, dass das auf dem Boden stehende Gehäuse (17) der Gasdruckquelle als Standfuß für den bestimmungsgemäß orientierten Behälter (11) dient, wobei der Gaseinlass (13) und der Auslass (15) in einer Entnahmeeinheit (29) des Behälters (11) ausgebildet sind, die an einer Stirnseite des Behälters (11) insbesondere lösbar angebracht und bevorzugt mit dem Behälter (11) verschraubt ist, wobei der Behälter (11) über die Entnahmeeinheit (29) mit dem Gehäuse (17) koppelbar ist.

4. System nach einem der vorhergehenden Ansprüche,
**dadurch gekennzeichnet,**
**dass** der Behälter (11) im Benutzungszustand ausschließlich über das Gehäuse (17) am Boden abgestützt ist.

5. System nach einem der vorhergehenden Ansprüche,
**dadurch gekennzeichnet,**
**dass** das Gehäuse (17) wenigstens eine ebene Standfläche aufweist.

6. System nach einem der vorhergehenden Ansprüche,
**dadurch gekennzeichnet,**
**dass** das Gehäuse (17) etwa quaderförmig ausgebildet ist.

7. System nach einem der vorhergehenden Ansprüche,
**dadurch gekennzeichnet,**
**dass** der Behälter (11) im mit dem Gehäuse (17) gekoppelten Zustand auf dem Gehäuse (17) aufsitzt.

8. System nach einem der vorhergehenden Ansprüche,
**dadurch gekennzeichnet,**
**dass** zur Koppelung des Behälters (11) mit dem Gehäuse (17) lediglich eine einzige in einem Zuge erfolgende, insbesondere lineare Relativbewegung zwischen dem Behälter (11) und dem Gehäuse (17) erforderlich ist.

9. System nach einem der vorhergehenden Ansprüche,
**dadurch gekennzeichnet,**
**dass** der Behälter (11) im mit dem Gehäuse (17) gekoppelten Zustand an Bewegungen relativ zum Gehäuse (17) in von einer Koppelrichtung abweichenden Richtungen gehindert ist.

10. System nach einem der vorhergehenden Ansprüche,
**dadurch gekennzeichnet,**
**dass** der Kopplungsabschnitt (19) an einem im Benutzungszustand vom Boden beabstandeten Bereich des Gehäuses (17) und insbesondere an einer parallel zu einer Standfläche des Gehäuses (17) verlaufenden Gehäuseseite (21) ausgebildet ist.

11. System nach einem der vorhergehenden Ansprüche,
**dadurch gekennzeichnet,**
**dass** der Kopplungsabschnitt (19) am Randbereich einer Gehäuseseite (21) ausgebildet ist, der eine zumindest im Benutzungszustand vorhandene Gehäuseöffnung begrenzet.

12. System nach Anspruch 11,
**dadurch gekennzeichnet,**
**dass** die Gehäuseöffnung von einer offenen Gehäuseseite gebildet ist, die vorzugsweise bei Nichtbenutzung verschlossen ist.

13. System nach Anspruch 11 oder 12,
**dadurch gekennzeichnet,**
**dass** der Behälter (11) über die Gehäuseöffnung an die Gasdruckquelle anschließbar ist, insbesondere über eine bei Nichtbenutzung zusammen mit der Gasdruckquelle im Gehäuse (17) untergebrachte und bevorzugt permanent mit der Gasdruckquelle verbundene Leitung (23).

14. System nach einem der Ansprüche 11 bis 13,
**dadurch gekennzeichnet,**
**dass** die Gehäuseöffnung mittels einer Verschlussklappe (25) verschließbar ist, wobei vorzugsweise der Kopplungsabschnitt (19) für den Behälter (11) an einer Gehäuseseite (21) ausgebildet ist, die der Gehäuseseite (22), an der die Verschlussklappe (25) angelenkt ist, gegenüberliegt.

15. System nach einem der vorhergehenden Ansprüche,
**dadurch gekennzeichnet,**
**dass** der Kopplungsabschnitt (19) eine Aussparung (27) umfasst, die in einer der Gehäuseseiten (21) ausgebildet und mit der ein Kopplungsbereich des Behälters (11) insbesondere form- und/oder kraftschlüssig in Eingriff bringbar ist.

16. System nach einem der vorhergehenden Ansprüche,
**dadurch gekennzeichnet,**
**dass** die Aussparung (27) eine vorzugsweise etwa U-förmige Einbuchtung in einem Randbereich einer der Gehäuseseiten (21) umfasst:

17. System nach einem der vorhergehenden Ansprüche,
**dadurch gekennzeichnet,**
**dass** der Behälter (11) etwa zylindrisch oder flaschenförmig ausgebildet und derart mit dem Gehäuse (17) koppelbar ist, dass im Benutzungszustand die Längsachse des Behälters (11) sich zumindest näherungsweise in vertikaler Richtung erstreckt.

18. System nach Anspruch 3,
**dadurch gekennzeichnet,**
**dass** der Behälter (11) insofern auf dem Kopf stehend mit dem Gehäuse (17) koppelbar ist, als der Behälter (11) mit der Entnahmeeinheit (29) dem Boden zugewandt ist.

19. System nach einem der vorhergehenden Ansprüche,
**dadurch gekennzeichnet,**
**dass** der Behälter (11), insbesondere eine Entnahmeeinheit (29) des Behälters (11), mit Führungs- und/oder Haltemitteln (31) versehen ist, die mit dem Kopplungsabschnitt (19) des Gehäuses (17) zusammenwirken.

20. System nach Anspruch 19,
**dadurch gekennzeichnet,**
**dass** die Führungs- und/oder Haltemittel (31) in Form von Schlitzen oder Nuten vorgesehen sind, die mit Randbereichen zusammenwirken, welche eine in einer der Gehäuseseiten (21) ausgebildete Aussparung (27) für den Behälter (11), insbesondere für eine Entnahmeeinheit (29) des Behälters (11), begrenzen.

21. System nach einem der vorhergehenden Ansprüche,
**dadurch gekennzeichnet,**
**dass** die Führungs- und/oder Haltemittel (31) an einander diametral gegenüberliegenden Seiten eines zylindrischen Abschnitts (30) des Behälters (11), insbesondere einer Entnahmeeinheit (29) des Behälters (11), ausgebildet sind.

22. System nach einem der vorhergehenden Ansprüche,
**dadurch gekennzeichnet,**
**dass** der Behälter (11), insbesondere eine Entnahmeeinheit (29) des Behälters (11), mit Anschlägen (33) versehen ist, über welche die Sollposition des mit dem Gehäuse (17) gekoppelten Behälters (11) festgelegt ist.

23. System nach Anspruch 22,
**dadurch gekennzeichnet,**
**dass** die Anschläge (33) als Aufschieb- oder Aufsteckbegrenzung für den Behälter (11) ausgebildet sind.

24. System nach einem der vorhergehenden Ansprüche,
**dadurch gekennzeichnet,**
**dass** die vom Behälter (11) abgewandte Seite der Entnahmeeinheit (29) als Standfläche ausgebildet ist.

## Claims

1. A system for the sealing of inflatable articles, in particular tires, with at least one container (11) containing a sealant and having a gas inlet (13) and an outlet (15) which can be coupled to an article to be sealed, and with a source of gas pressure connectable to the gas inlet (13) of the container (11) and at least partly accommodated in a housing (17), in particular an electrically drivable compressor, wherein the housing (17) of the gas pressure source has at least one coupling section (19) at which the container (11) can be coupled mechanically to the housing (17), in particular coupled in shape matched and/or force transmitting manner, to establish a state of use in such a way that the housing (17) of the gas pressure source standing on the ground serves as a pedestal for the container (11) which is oriented in accordance with its intended purpose, wherein the container (11) can be pushed onto the housing (17) and/or plugged onto it.

2. A system for the sealing of inflatable articles, in particular tires, with at least one container (11) containing a sealant and having a gas inlet (13) and an outlet (15) which can be coupled to an article to be sealed, and with a source of gas pressure connectable to the gas inlet (13) of the container (11) and at least partly accommodated in a housing (17), in particular an electrically drivable compressor, wherein the housing (17) of the gas pressure source has at least one coupling section (19) at which the container (11) can be coupled mechanically to the housing (17), in particular coupled in shape matched and/or force transmitting manner, to establish a state of use in such a way that the housing (17) of the gas pressure source standing on the ground serves as a pedestal for the container (11) which is oriented in accordance with its intended purpose, wherein the coupling section (19) is formed at the edge region of a housing side (21), said edge region bounding a housing opening which is present at least in the state of use and which can be closed by means of a closure cap (25).

3. A system for the sealing of inflatable articles, in particular tires, with at least one container (11) containing a sealant and having a gas inlet (13) and an outlet (15) which can be coupled to an article to be sealed, and with a source of gas pressure connectable to the gas inlet (13) of the container (11) and at least partly accommodated in a housing (17), in particular an electrically drivable compressor, wherein the housing (17) of the gas pressure source has at least one coupling section (19) at which the container (11) can be coupled mechanically to the housing (17), in particular coupled in shape matched and/ or force transmitting manner, to establish a state of use in such a way that the housing (17) of the gas pressure source standing on the ground serves as a pedestal for the container (11) which is oriented in accordance with its intended purpose, wherein the gas inlet (13) and the outlet (15) are formed in an extraction unit (29) of the container (11) which is mounted, in particular releasably mounted, at one end of the container (11) and preferably screwed to the container (11), with the container (11) being capable of being coupled to the housing (17) via the extraction unit (29).

4. A system in accordance with any one of the preceding claims, **characterized in that** the container (11) is supported on the ground in the state of use exclusively via the housing (17).

5. A system in accordance with any one of the preceding claims, **characterized in that** the housing (17) has at least one flat standing surface.

6. A system in accordance with any one of the preceding claims, **characterized in that** the housing (17) is approximately of parallelepiped shape.

7. A system in accordance with any one of the preceding claims, **characterized in that** the container (11) sits on the housing (17) in the state coupled to the housing (17).

8. A system in accordance with any one of the preceding claims, **characterized in that** only a single relative movement between the container (11) and the housing (17), in particular a linear relative movement, is required for the coupling of the container (11) to the housing (17) which takes place in one go.

9. A system in accordance with any one of the preceding claims, **characterized in that** the container (11) is hindered in the state coupled to the housing (17) from movements relative to the housing (17) in directions which differ from a coupling direction.

10. A system in accordance with any one of the preceding claims, **characterized in that** the coupling section (19) is formed at a region of the housing (17) spaced apart from the ground in the state of use and in particular at a side (21) of the housing which extends parallel to a standing surface of the housing (17).

11. A system in accordance with any one of the preceding claims, **characterized in that** the coupling section (19) is formed at the edge region of a housing side (21) which bounds a housing opening which is present at least in the state of use.

12. A system in accordance with claim 11, **characterized in that** the housing opening is formed by an open side of the housing which is preferably closed when not in use.

13. A system in accordance with claim 11 or 12, **characterized in that** the container (11) can be connected via the housing opening to the gas pressure source, in particular via a line (23) which is accommodated when not in use together with the gas pressure source in the housing (17) and is preferably permanently connected to the gas pressure source.

14. A system in accordance with any one of the claims 11 to 13, **characterized in that** the housing opening can be closed by means of a closure cap (25), with the coupling section (19) for the container (11) preferably being formed at a side (21) of the housing which lies opposite to the side of the housing (22) to which the closure cap (25) is hinged.

15. A system in accordance with any one of the preceding claims, **characterized in that** the coupling section (19) has a cut-out (27) which is formed in one of the housing sides (21) and with which a coupling region of the container (11) can be brought into engagement, in particular into shape matched and/or force transmitting engagement.

16. A system in accordance with any one of the preceding claims, **characterized in that** the cut-out (27) includes a preferably approximately U-shaped recess in an edge zone of one of the housing sides (21).

17. A system in accordance with any one of the preceding claims, **characterized in that** the container (11) is made approximately cylindrical or of bottle-like shape and can be coupled to the housing (17) in such a way that in the state of use the longitudinal axis of the container (11) extends at least approximately in a vertical direction.

18. A system in accordance with claim 3, **characterized in that** the container (11) can be coupled to the housing (17) standing on its head in so far as the extraction unit (29) of the container (11) faces towards the ground.

19. A system in accordance with any one of the preceding claims, **characterized in that** the container (11), in particular an extraction unit (29) of the container (11), is provided with guide and/or holding means (31) which cooperate with the coupling section (19) of the housing (17).

20. A system in accordance with claim 19, **characterized in that** the guide and/or holding means (31) are provided in the form of slots or grooves which cooperate with edge zones which bound a cut-out (27) for the container (11), in particular for an extraction unit (29) of the container (11), formed in one of the housing sides (21).

21. A system in accordance with any one of the preceding claims, **characterized in that** the guide and/or holding means (31) are formed on diametrically oppositely disposed sides of a cylindrical section (30) of the container (11), in particular of an extraction unit (29) of the container (11).

22. A system in accordance with any one of the preceding claims, **characterized in that** the container (11), in particular an extraction unit (29) of the container (11), is provided with abutments (33) via which the desired position of the container (11) coupled to the housing (17) is determined.

23. A system in accordance with claim 22, **characterized in that** the abutments (33) are formed as a push-on or plug-on limitation for the container (11).

24. A system in accordance with any one of the preceding claims, **characterized in that** the side of the extraction unit (29) remote from the container (11) is formed as a standing surface.

## Revendications

1. Système pour étancher des objets gonflables, en particulier des pneumatiques, comprenant au moins un récipient (11) contenant un produit d'étanchement et présentant une entrée de gaz (13) et une sortie (15) susceptible d'être accouplée à l'objet à étancher, et une source de gaz sous pression, susceptible d'être raccordée à l'entrée de gaz (13) du récipient (11) et au moins partiellement logée dans un boîtier (17), en particulier un compresseur à fonctionnement électrique, dans lequel le boîtier (17) de la source de gaz sous pression comprend au moins un tronçon d'accouplement (19) auquel peut être accouplé le récipient (11) pour établir une situation d'utilisation de façon mécanique avec le boîtier (17), et en particulier par coopération de formes et/ou par coopération de forces, de telle manière que le boîtier (17), debout sur le sol, de la source de gaz sous pression sert de pied de pose pour le récipient (11) orienté de façon conforme à sa destination, le récipient (11) pouvant être enfilé et/ou enfiché sur le boîtier (17).

2. Système pour étancher des objets gonflables, en particulier des pneumatiques, comprenant au moins un récipient (11) contenant un produit d'étanchement et présentant une entrée de gaz (13) et une sortie (15) susceptible d'être accouplée à l'objet à étancher, et une source de gaz sous pression, susceptible d'être raccordée à l'entrée de gaz (13) du récipient (11) et au moins partiellement logée dans un boîtier (17), en particulier un compresseur à fonctionnement électrique, dans lequel le boîtier (17) de la source de gaz sous pression comprend au moins un tronçon d'accouplement (19) auquel peut être accouplé le récipient (11) pour établir une situation d'utilisation de façon mécanique avec le boîtier (17), et en particulier par coopération de formes et/ou par coopération de forces, de telle manière que le boîtier (17), debout sur le sol, de la source de gaz sous pression sert de pied de pose pour le récipient (11) orienté de façon conforme à sa destination, le tronçon d'accouplement (19) étant réalisé dans la zone de bordure d'un côté (21) du boîtier qui délimite une ouverture du boîtier, présente au moins dans la situation d'utilisation, laquelle est refermable au moyen d'un clapet de fermeture (25).

3. Système pour étancher des objets gonflables, en particulier des pneumatiques, comprenant au moins un récipient (11) contenant un produit d'étanchement et présentant une entrée de gaz (13) et une sortie (15) susceptible d'être accouplée à l'objet à étancher, et une source de gaz sous pression, susceptible d'être raccordée à l'entrée de gaz (13) du récipient (11) et au moins partiellement logée dans un boîtier (17), en particulier un compresseur à fonctionnement électrique, dans lequel le boîtier (17) de la source de gaz sous pression comprend au moins un tronçon d'accouplement (19) auquel peut être accouplé le récipient (11) pour établir une situation d'utilisation de façon mécanique avec le boîtier (17), et en particulier par coopération de formes et/ou par coopération de forces, de telle manière que le boîtier (17), debout sur le sol, de la source de gaz sous pression sert de pied de pose pour le récipient (11) orienté de façon conforme à sa destination, l'entrée de gaz (13) et la sortie (15) étant réalisées dans une unité de prélèvement (29) du récipient (11), laquelle est montée, en particulier de façon détachable, sur un côté frontal du récipient (11), et de préférence vissée avec le récipient (11), et le récipient (11) est susceptible d'être accouplé avec le boîtier (17) par l'intermédiaire de l'unité de prélèvement (29).

4. Système selon l'une des revendications précédentes, **caractérisé en ce que**, dans la situation d'utilisation, le récipient (11) s'appuie au sol exclusivement par l'intermédiaire du boîtier (17).

5. Système selon l'une des revendications précédentes, **caractérisé en ce que** le boîtier (17) présente au moins une surface de pose plane.

6. Système selon l'une des revendications précédentes, **caractérisé en ce que** le boîtier (17) est réalisé approximativement sous forme de parallélépipède.

7. Système selon l'une des revendications précédentes, **caractérisé en ce que**, dans la situation accouplée avec le boîtier (17), le récipient (11) repose sur le boîtier (17).

8. Système selon l'une des revendications précédentes, **caractérisé en ce que** pour l'accouplement du récipient (11) avec le boîtier (17), il suffit simplement d'un unique mouvement relatif, effectué en une seule fois, et en particulier linéaire, entre le récipient (11) et le boîtier (17).

9. Système selon l'une des revendications précédentes, **caractérisé en ce que** le récipient (11) est empêché, dans la situation accouplée avec le boîtier (17), d'exécuter des mouvements par rapport au boîtier (17) dans des directions qui s'écartent d'une direction d'accouplement.

10. Système selon l'une des revendications précédentes, **caractérisé en ce que** le tronçon d'accouplement (19) est réalisé dans une zone du boîtier (17) à distance du sol dans la situation d'utilisation, et en particulier sur un côté du boîtier (21) qui s'étend parallèlement à une surface de pose du boîtier (17).

11. Système selon l'une des revendications précédentes, **caractérisé en ce que** le tronçon d'accouplement (19) est réalisé dans la région de bordure d'un côté (21) du boîtier qui délimite une ouverture du boîtier, présente au moins dans la situation d'utilisation.

12. Système selon la revendication 11, **caractérisé en ce que** l'ouverture du boîtier est formée par un côté ouvert du boîtier, qui est refermé de préférence en cas de non-utilisation.

13. Système selon la revendication 11 ou 12, **caractérisé en ce que** le récipient (11) est susceptible d'être raccordé par l'intermédiaire de l'ouverture à la source de gaz sous pression, en particulier par l'intermédiaire d'une conduite (23) logée conjointement avec la source de gaz sous pression dans le boîtier (17) en cas de non d'utilisation, et de préférence reliée de façon permanente à la source de gaz sous pression.

14. Système selon l'une des revendications 11 à 13, **caractérisé en ce que** l'ouverture du boîtier est refermable au moyen d'un clapet de fermeture (25), et le tronçon d'accouplement (19) pour le récipient (11) est de préférence réalisé sur un côté du boîtier (21) qui est opposé au côté du boîtier (22) sur lequel est articulé le clapet de fermeture (25).

15. Système selon l'une des revendications précédentes, **caractérisé en ce que** le tronçon d'accouplement (19) comporte une échancrure (27) qui est réalisée dans l'un des côtés (21) du boîtier et avec laquelle une zone d'accouplement du boîtier (11) peut être amenée en engagement, en particulier par coopération de formes et/ou par coopération de forces.

16. Système selon l'une des revendications précédentes, et **caractérisé en ce que** l'échancrure (27) comporte un creux de préférence approximativement en forme de U dans une région de bordure de l'un des côtés du boîtier (21).

17. Système selon l'une des revendications précédentes, **caractérisé en ce que** le récipient (11) est réalisé approximativement sous forme cylindrique ou sous forme de bouteille, et peut être accouplé au boîtier (17) de telle manière que, dans la situation d'utilisation, l'axe longitudinal du récipient (11) s'étend au moins approximativement en direction verticale.

18. Système selon la revendication 3, **caractérisé en ce que** le récipient (11) est susceptible d'être accouplé au boîtier (17) debout sur sa tête lorsque le récipient (11) avec l'unité de prélèvement (29) est tourné vers le sol.

19. Système selon l'une des revendications précédentes, **caractérisé en ce que** le récipient (11), en particulier une unité de prélèvement (29) du récipient (11), est pourvu de moyens de guidage et/ou de retenue (31) qui coopèrent avec le tronçon d'accouplement (19) du boîtier (17).

20. Système selon la revendication 19, **caractérisé en ce que** les moyens de guidage et/ou de retenue (31) sont prévus sous la forme de fentes ou de gorges, qui coopèrent avec des régions de bordure qui délimitent un évidement (27), réalisé dans l'un des côtés (21) du boîtier, pour le récipient (11), en particulier pour une unité de prélèvement (29) du récipient (11).

21. Système selon l'une des revendications précédentes, **caractérisé en ce que** les moyens de guidage et/ou de retenue (31) sont réalisés sur des côtés diamétralement opposés l'un à l'autre d'un tronçon cylindrique (30) du récipient (11), en particulier d'une unité de prélèvement (29) du récipient (11).

22. Système selon l'une des revendications précédentes, **caractérisé en ce que** le récipient (11), en particulier une unité de prélèvement (29) du récipient (11), est pourvu de butées (33) au moyen desquelles est fixée la position de consigne du récipient (11) couplé avec le boîtier (17).

23. Système selon la revendication 22, **caractérisé en ce que** les butées (33) sont réalisées sous forme de limitations pour l'enfilage ou l'enfichage pour le récipient (11).

24. Système selon l'une des revendications précédentes, **caractérisé en ce que** le côté de l'unité de prélèvement (29) détourné du récipient (11) est réalisé comme surface de pose.
